# EUROPEAN PATENT APPLICATION

(11) **EP 2 200 021 A1**
(43) Date of publication of application: **23.06.2010**
(21) Application number: 08425789.8
(22) Date of filing: 10.12.2008
(51) Int. Cl.: G10L 15/26, G10L 15/22, G01C 21/36, H04M 1/247

(54) **Personalization of user voice commands via an automotive user interface**

(71) Applicant: Fiat Group Automobiles S.p.A., 10135 Torino (TO) (IT)
(72) Inventor: Di Lago, Vincenzo, 10135 Torino (IT)
(74) Representative: Bergadano, Mirko

(57) **Abstract**

Described herein is an automotive user interface (2) configured for implementing pre-set functions (Fi) that can be activated by means of corresponding voice commands (CVi) that can be issued by a user, and for enabling the user to personalize as desired the voice commands (CVi) for activation of the pre-set functions (Fi) themselves.

## Description

The present invention relates to personalization of user voice commands for activating functions that can be implemented via an automotive user interface.

As is known, in the automotive field designing of functions accessible to the driver or to the passengers on board the motor vehicle is increasingly oriented towards solutions characterized by a high interactivity between the driver, the passengers, the motor vehicle, and the outside world.

In particular, there is an increasingly greater control that the driver and the passengers can perform over the functionality of the motor vehicle, such as, for example, control of the air-conditioning system, stereo system, etc., and over the interaction of the motor vehicle with the outside world, such as, for example, handling of the phone calls performed with the cellphone and of their superposition with listening to music, handling of the information coming from the on-board computer, interaction with the on-board satellite navigator, etc.

For this purpose, modern motor vehicles are provided with a human-machine interface (HMI) referred to hereinafter as "automotive user interface", whereby a user, whether the driver or a passenger, can interact with the on-board systems, such as, for example, enter a destination into the satellite navigator, an address or a phone number into a phone-book of an on-board handsfree system for handling phone calls from a cellphone, etc.

The infotainment system Blue&Me^{™}, for example, is an on-board communication and entertainment automotive user interface developed by the present applicant, which offers Bluetooth connectivity, USB, and a handsfree telephone kit that can be completely controlled via voice commands. In particular, the Blue&Me^{™} system enables the driver and passengers to use personal devices, such as cellphones, palm-tops, music players, or external hard disks, without having to resort to commands for said devices so as to render their use during driving more convenient and less dangerous.

For the above purpose, the Blue&Me^{™} system is provided with a voice-recognition system that enables the user to activate a series of functions through voice commands, which are typically set beforehand by the manufacturer of the motor vehicle and/or by the supplier of the automotive user interface.

The use of pre-set standard voice commands for activation of the functions of the automotive user interface may prove inconvenient whenever there occurs the need on the part of the user to be able to set voice commands of his own, i.e., personalized, instead of the standard set of voice commands fixed beforehand and not modifiable by the user. In the case in point, said need derives typically from an objective difficulty encountered by users in storing the specific words for the pre-set voice commands and/or in pronouncing the words themselves correctly, in the same way as they were stored.

There is hence felt the need to provide an automotive user interface that will enable a user to personalize the voice commands for activation of the functions that can be implemented by the automotive user interface itself.

Said need is met by the present invention in so far as it relates to an automotive user interface as defined in the annexed claims.

Said need is moreover met by the present invention in so far as it relates to a motor vehicle provided with an automotive user interface as defined in Claim 11.

For a better understanding of the present invention, a preferred embodiment is now described, purely by way of nonlimiting example and with reference to the attached drawings, wherein:
- Figure 1 is a schematic illustration of an automotive user interface provided according to the teachings of the present invention;
- Figure 2 illustrates a flowchart of the operations implemented by the automotive user interface for enabling a user to personalize the voice commands; whilst
- Figure 3 illustrates a flowchart of the operations implemented by the automotive user interface for enabling a user to personalize a voice-command profile.

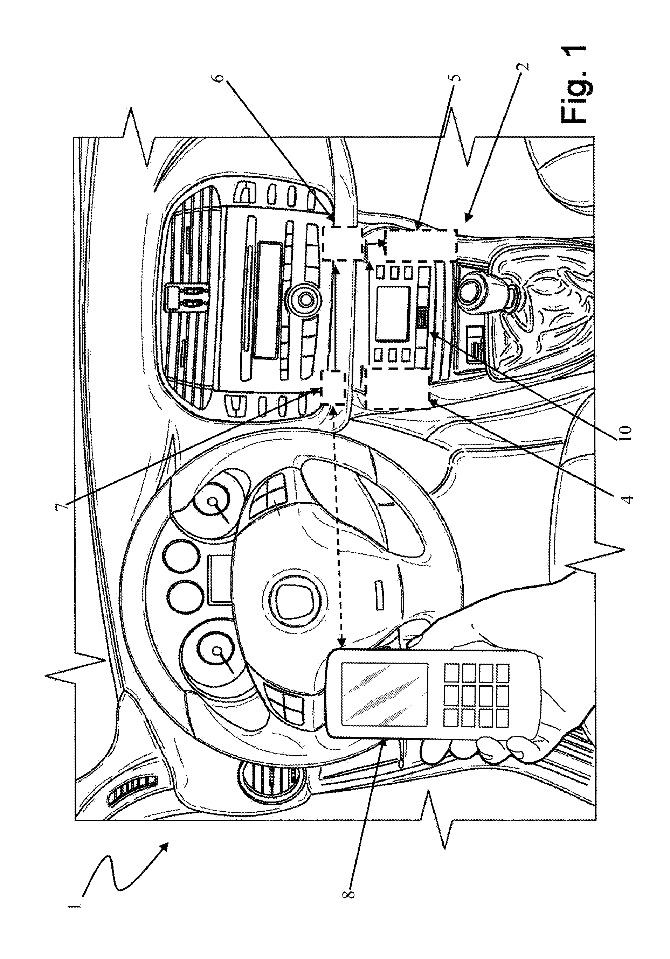

With reference to Figure 1, designated as a whole by the reference number 1 is a motor vehicle (of which only the passenger compartment is represented for simplicity of description), which is provided with an automotive user interface 2 structured for enabling a user, whether the driver or a passenger, to interact with one or more on-board electronic systems (not illustrated) and to impart voice commands CVi for selection and activation of some pre-set functions Fi that can be implemented by the on-board systems themselves.

In particular, the automotive user interface 2 can be structured, for example, for enabling the user to access and hence activate functions Fi that can be implemented by a satellite navigator (not illustrated), such as, for example, a function for search of a destination and for determination of the route associated thereto, and/or for accessing and hence activating functions Fi that can be implemented by a cellphone, such as, for example, a function for handling phone calls, and/or for accessing and activating functions Fi of any other system installed on board the motor vehicle 1.

Unlike the automotive interfaces of a known type, the automotive user interface 2 is configured for enabling one or more users to personalize the voice commands CVi for activation of the pre-set functions Fi that can be implemented by the automotive user interface 2 itself.

In other words, the automotive user interface 2 conveniently enables one or more users to fix, i.e., define, a personalized voice command CVi and to associate the personalized voice command CVi itself to a command for activation of a specific function Fi that can be implemented precisely by the automotive user interface 2.

In this way, in use, when the user utters the personalized voice command CVi set previously, the automotive user interface 2 implements the function Fi corresponding to the voice command CVi thus imparted.

For this purpose, the automotive user interface 2 can comprise: a voice-recognition system 4 capable of receiving and recognizing a voice command CVi issued by the user; a storage device 5, which contains commands for activation of the pre-set functions Fi; and an electronic control unit 6, which, in a step of personalization of the voice commands CVi described in detail hereinafter, is able to receive the personalized voice commands CVi issued by the user so as to associate them to corresponding signals for activation of the functions Fi.

Following upon completion of the step of personalization of the voice commands, the electronic control unit 6 is able to receive a voice command CVi issued by the user, and generates the corresponding command for activation of the pre-set function Fi.

The automotive user interface 2 can moreover comprise a selection device 10, which is designed to enable the user, during the step of personalization of the voice commands, to display the various functions Fi that can be implemented by the on-board systems that interact with the automotive user interface 2, and/or to select a function Fi to which the personalized voice command CVi is to be assigned, and/or to confirm the assignment of the voice command just issued by the user, and/or to carry out operations of erasure/replacement of the voice command CVi with a new voice command CVi.

In the case in point, in the example shown in Figure 1, the selection device 10 comprises a display unit and a command unit. The display unit can be constituted, for example, by a display, which is able to display a selection menu that lists for the user the functions Fi that can be implemented by the automotive user interface 2, whilst the command unit comprises preferably, but not necessarily, push-buttons that can be activated by the user for imparting the commands described above.

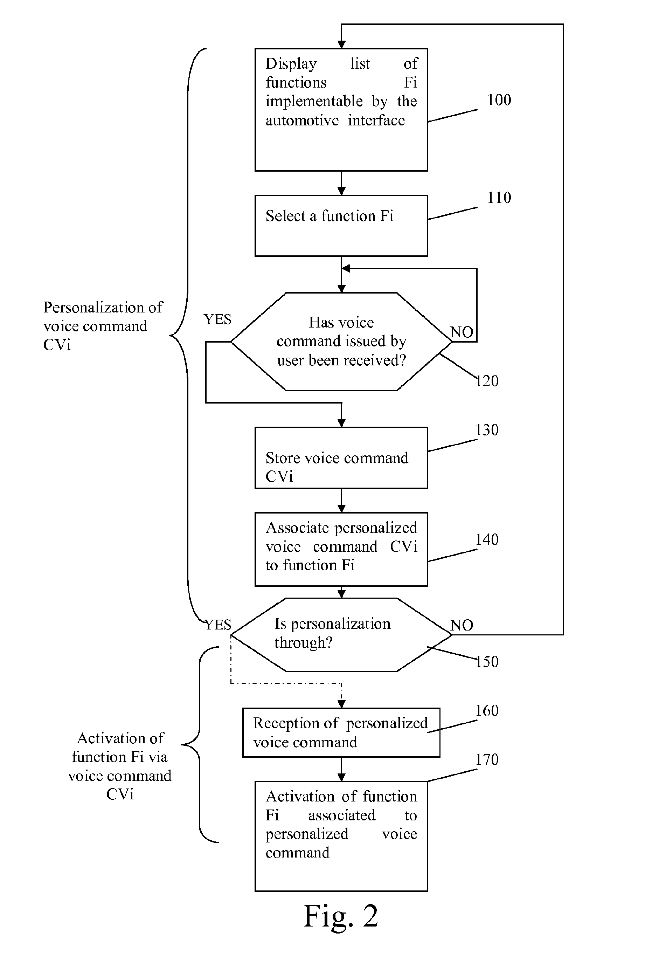

Figure 2 illustrates the operations implemented by the automotive user interface 2 during the step of personalization of the voice commands by the user, in which there is assumed, in the initial step (block 100), a display, by the selection device 10, of a selection menu listing the functions Fi that can be implemented by the automotive user interface 2.

The step of personalization of the voice commands envisages that the user will select, preferably, but not necessarily, via the selection menu, the function Fi to which the user intends to assign the personalized voice command CVi (block 110).

At this point, i.e., following upon selection of the function Fi, the automotive user interface 2 sets itself in a wait state, which terminates (output YES from block 120) when the user issues the personalized voice command CVi to be associated to the function Fi selected previously.

At this point, the voice-recognition system 4 communicates the personalized voice command CVi to the electronic control unit 6, which, in turn, associates the voice command CVi to the command for activation of the selected function Fi.

In this step, hence, the electronic control unit 6 stores the new personalized voice command CVi in the storage device 5 associating it to the function Fi selected by the user.

Then, in the case where the personalization step is not completed (output NO from block 150), the user can re-iterate the operations described in blocks 100-140 in such a way as to personalize a new voice command CVi for a different function Fi.

In use, when the user issues the voice command CVi previously personalized for activation of the function Fi (block 160), the voice-recognition system 4 communicates the voice command CVi to the electronic control unit 6, which identifies in the storage device 5 the command for activation of the function Fi associated to the voice command CVi and implements it in such a way as to cause activation of the function Fi itself (block 170).

With reference to Figure 1, the automotive user interface 2 is moreover structured in such a way as to enable a series of users to set a series of personalized voice commands CVi which define respective personalized voice-command profiles Pfi, each of which can be implemented by the automotive user interface 2 on the basis of detection of the presence/absence and/or of an identification of the user in the passenger compartment of the motor vehicle 1.

In the case in point, a voice-command profile PFi comprises: one or more voice commands CVi personalized by a user; one or more functions Fi that can be implemented by the automotive user interface 2 and that can be activated by corresponding voice commands CVi; and an identifier code C_{id} uniquely associated to a personal portable communication device 8 of the user himself.

For this purpose, the automotive user interface 2 comprises a wireless-communication module 7, capable of setting up, within its own communication range, a wireless connection with personal portable communication devices 8, i.e., ones associated to a user present in the passenger compartment of the motor vehicle 1.

In particular, the wireless-communication module 7 is able to set up a radiofrequency wireless connection, according to the Bluetooth communication protocol, with a personal portable communication device 8, which can correspond, for example, to a cellphone (shown in Figure 1), and/or a palm-top, or any similar portable wireless communication apparatus.

The wireless-communication module 7 is structured for setting up an operation of pairing with the portable communication device 8. During the pairing operation, the wireless-communication module 7, thanks to the known architecture of the Bluetooth communication protocol, receives from the portable communication device 8 a Bluetooth code that uniquely identifies the portable communication device 8 itself.

The electronic control unit 6 co-operates with the wireless-communication module 8 for receiving from the latter the Bluetooth code of the portable communication device 8 and is designed to process it so that it is able to determine a condition of presence and/or absence of the portable communication device 8 and/or carry out an identification of the portable communication device 8 itself.

The electronic control unit 6 can, moreover, be structured for enabling the user to set a voice-command profile Pfi of his own, and for implementing automatically a voice-command profile PFi comprised in the set of the profiles PFi stored, on the basis of identification of the portable communication device 8, i.e., as a function of the indirect recognition of the user.

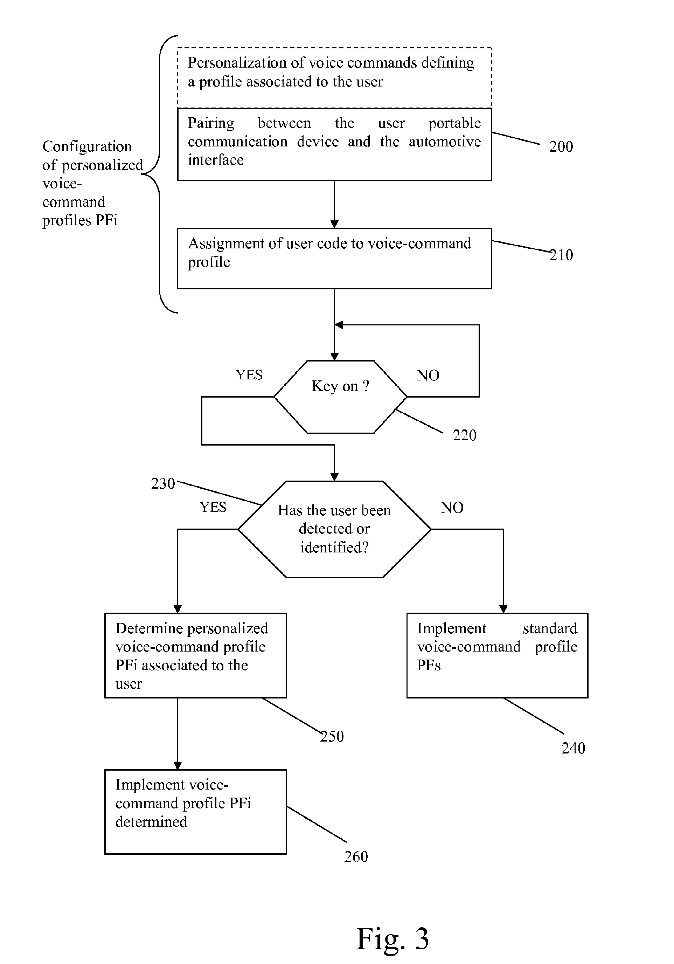

The flowchart illustrated in Figure 3 shows the different operating steps implemented by the electronic control unit 6 of the automotive user interface 2 for enabling the user to configure a personalized voice-command profile PFi.

In particular, the operation of configuration of a profile PFi (block 200) can envisage that, in addition to the operations of personalization of voice commands CVi implemented in blocks 100-140 described above and shown in Figure 2, there will be performed assignment to the profile itself of an identifier code C_{id} corresponding to the Bluetooth code of the portable communication device 8.

In particular, said assignment can be performed automatically through an operation of pairing between the portable communication device 8 of the user and the automotive user interface 2 (block 200).

In greater detail, during the pairing operation, the electronic control unit 6 receives the Bluetooth code from the wireless-communication module 7 and assigns it to the user identifier code C_{id}, which is in turn assigned to the personalized voice-command user profile PFi contained in the storage device 5 (block 210).

It should be pointed out that the automotive user interface 2 can be configured in such a way that, following upon completion of a voice-command profile PFi, the next operations of modification or erasure of the voice commands CVi present in the voice-command profile PFi itself can be performed on the basis of a prior identification of the user. In particular, the automotive user interface 2 can be configured in such a way as to enable the user to modify his own personalized voice-command profile PFi only following upon detection and recognition/identification by the electronic control unit 6 of the user identifier code C_{id} associated to the portable device 8 of the user himself.

Preferably, but not necessarily, the storage device 5 can contain a pre-set voice-command profile PFs, which is activated by the electronic control unit 6 in the case where no user is detected and/or recognized/identified upon turning-on of the motor vehicle 1.

In the case in point, the pre-set voice-command profile PFs is a generic profile comprising the functions Fi that can be implemented by the automotive user interface 2 and, for each function Fi, a standard voice command CVs, which is pre-set and not modifiable by the user. The pre-set voice-command profile PFs can, for example, be set by the manufacturer of the motor vehicle and/or by the supplier of the automotive user interface 2 and is hence not modifiable by the user.

With reference to Figure 3, the automotive user interface 2, once the step of configuration of the personalized voice-command profile PFi has terminated, is able to implement the next operations for implementing automatically a personalized voice-command profile PFi, whenever a driver inserts the key for turning on the engine and performs key-on.

In particular, when a driver performs key-on (output YES from block 220), the automotive user interface 2 carries out pairing with the portable communication device 8 carried by the driver present in the passenger compartment of the motor vehicle 1.

In particular, in this step, the wireless-communication module 7 sets up a Bluetooth communication with the portable communication device 8 and communicates to the electronic control unit 6 the corresponding identifier code C_{id}.

The electronic control unit 6 compares the identifier code C_{id} received with the identifier code C_{id} of the personalized voice-command profiles PFi contained in the storage device 5 and, in the case where the identifier code C_{id} received corresponds to one of the identifier codes C_{id} stored (output YES from block 230), the electronic control unit 6 selects the personalized voice-command profile PFi associated to the identifier code C_{id} itself (block 250).

At this point, the automotive user interface 2 implements the personalized voice-command profile PFi identified in the previous block and sets itself for being able to recognize the voice commands CVi issued by the user identified so as to be able to activate the corresponding functions Fi (block 260).

In the case where the user is not provided with a portable communication device 8 that can be recognized by the automotive user interface 2 (output NO from block 230), and/or in the case where the Bluetooth communication for recognition has not been set up correctly and consequently the procedure of identification has not gone through, for example because the identifier code C_{id} read does not correspond to any identifier code C_{id} stored in the storage device 5, the electronic control unit 6 selects from the storage device 5 the pre-set voice-command profile PAs that is not associated to any identifier code C_{id} (block 240). In this case, activation of the functions Fi by the user can occur only if the user issues the pre-set standard voice commands.

From an examination of the characteristics of the present invention, the advantages that it enables are evident.

In the first place, the automotive user interface 2 is extremely flexible and versatile in so far as it enables the user to personalize the voice commands for activation of the functions as desired.

In addition, the automotive user interface 2, thanks to the procedure of identification of the user portable device, enables different users to access and hence use the voice commands of the respective profiles in a completely automatic way, without any manual operation of profile selection but simply through a recognition of the portable communication device.

Finally, it is clear that modifications and variations may be made to the automotive user interface described and illustrated herein, without thereby departing from the scope of the present invention, as defined in the annexed claims.

## Claims

1. An automotive user interface (2) configured to enable a user to activate pre-set functions (Fi) by means of corresponding voice commands (CVi); said interface being **characterized in that** it is moreover configured for enabling the user to personalize the voice commands (CVi) of activation of said pre-set functions (Fi).

2. The automotive user interface according to Claim 1, comprising voice-recognition means (4) configured to receive personalized voice commands (CVi) issued by a user, and electronic control means (6) configured to assignee said personalized voice commands (CVi) to respective commands for activation of said pre-set functions (Fi).

3. The automotive user interface according to Claim 2, comprising storage means (5) containing said commands for activation of said pre-set functions (Fi), and wherein said electronic control means (6) are configured to store in said storage means (5) said personalized voice commands (CVi) so as to associate them to respective commands for activation of said pre-set functions (Fi).

4. The automotive user interface according to Claim 3, wherein said electronic control means (6) are configured to activate said pre-set functions (Fi) on the basis of the personalized command signals (CVi) uttered by a user.

5. The automotive user interface according to any one of the preceding claims, comprising wireless-communication means (7) configured to detect and/or identify automatically personal portable wireless-communication devices (8) within their own communication range; said storage means (5) comprising voice-command profiles (PFi) (PFs) for activation of said pre-set functions (Fi); said electronic control means (6) being configured to implement one said voice-command profile (PFi)(PFs) as a function of the detection and/or identification of said user.

6. The automotive user interface according to Claim 5, wherein said storage means (5) comprise a series of personalized voice-command profiles (PFi) comprising one or more voice commands (CVi) personalized by respective users; said electronic control means (6) being configured for implementing one said personalized voice-command profile (PFi) on the basis of identification of a corresponding user.

7. The automotive user interface according to Claim 5 or Claim 6, wherein said storage means (5) comprise a pre-set voice-command profile (PFs) comprising one or more pre-set and non-modifiable voice commands (CVi); said electronic control means (6) being configured to implement said pre-set voice-command profile (PFs) in the absence of said user identification.

8. The automotive user interface according to any one of Claims 5 to 7, wherein said wireless-communication means (7) are configured to set up a Bluetooth communication with said portable communication device (8).

9. The automotive user interface according to any one of Claims 5 to 8, wherein said portable communication device (8) is a cellphone.

10. The automotive user interface according to any one of Claims 5 to 9, configured to enable the user to modify one or more voice commands contained in the corresponding voice-command profile (PFi) on the basis of said identification.

11. A motor vehicle comprising an automotive user interface (2) according to any one of the preceding claims.
